# EUROPÄISCHE PATENTSCHRIFT

(11) **EP 1 897 701 B1**
(45) Veröffentlichungstag und Bekanntmachung des Hinweises auf die Patenterteilung: **06.04.2011**
(21) Anmeldenummer: 07016942.0
(22) Anmeldetag: 29.08.2007
(51) Int. Cl.: B60B 21/06, B60B 1/04

(54) **Rad und Speichenbefestigungssystem, insbesondere für Fahrräder**
Wheel and spoke mounting system, in particular for bicycles
Roue système de fixation de rayons, en particulier pour vélos

(30) Priorität: 31.08.2006 DE 102006040919
(43) Veröffentlichungstag der Anmeldung: 12.03.2008
(73) Patentinhaber: DT Swiss AG, 2500 Biel (CH)
(72) Erfinder: Spahr, Stefan, 2543 Lengnau (CH); Walthert, Martin, 3013 Bern (CH); Reuteler, Andreas, 2502 Biel/Bienne (CH)
(74) Vertreter: Schütte, Hartmut

(56) Entgegenhaltungen:
- EP-A- 1 260 382
- WO-A-2005/072989
- CH-A- 355 041
- DE-U1-202006 009 707
- GB-A- 1 294 554

## Beschreibung

Die Erfindung betrifft ein Rad und ein Speichenbefestigungssystem, insbesondere für Fahrräder. Die Erfindung kann sowohl für Vorderräder als auch für Hinterräder, an denen in der Regel ein oder mehrere Ritzel angeordnet werden, eingesetzt werden.

Im Bereich der Amateure und des professionellen Radsports spielen die Belastbarkeit, das Gewicht und die Wartbarkeit der Komponenten eine entscheidende Rolle, da die Benutzer Wert auf hochwertige, leichte und einfach zu wartende Komponenten legen.

Hochbelastbar sind die heute regelmäßig eingesetzten Hohlkammerfelgen, die einen radial innen angeordneten Felgenboden, einen weiter radial außen angeordnetes Felgenbett und zwei seitliche den Felgenboden und das Felgenbett verbindende Felgenflanken aufweisen. Die Speichen sind dabei über die Speichennippel an dem Felgenboden aufgenommen. Zur Montage werden die Speichennippel von außen durch Löcher in dem Felgenbett durchgeführt und in Löchern im Felgenboden aufgenommen. Die Löcher im Felgenboden sind dabei so bemessen, dass die Nippelköpfe einen größeren Außendurchmesser aufweisen als der Durchmesser der Löcher in dem Felgenboden. Dadurch werden die Speichen zuverlässig am Felgenboden gehalten. Nachteilig bei diesen bekannten Felgen ist allerdings, dass der Einsatz von schlauchlosen Reifen nur schwierig möglich ist, da die Löcher im Felgenbett aufwändig abgedichtet werden müssen.

Zur Lösung dieses Problems ist mit der US 6,536,849B1 ein Rad und eine Felge bekannt geworden, wobei die radial äußeren Enden der Speichen in Speichenöffnungen auf den Felgenflanken aufgenommen werden. Die Speichenenden werden von Verstärkungselementen im Inneren der Hohlkammerfelgen gehalten. Zur Montage werden die mit den Verstärkungselementen versehenen Speichen schräg in die Speichenöffnungen auf den Felgenflanken eingeschoben und werden dann aus dieser gekippten Stellung in die vorgesehene Stellung zurückgekippt. Dabei legen sich innere und äußere Nasen der Verstärkungselemente innen bzw. außen an die Felgenflanken an, sodass die Speiche an der Felgenflanke in die radial nach innen gerichtete Richtung zugfest aufgenommen ist. Nachteilig an diesem bekannten System ist die aufwändige Gestaltung der Felgenflanken. Aufwändig ist weiterhin, dass die Speichenspannung durch Drehen der an der Nabe vorgesehenen Nabennippeln erfolgen muss. Dort steht zum Ansatz eines entsprechenden Werkzeugs nur wenig Platz zur Verfügung, sodass die Montage und die Wartung aufwändig sind.

Mit der EP 1 422 078A1 ist ein weiteres Speichenrad bekannt geworden, bei dem ein Speichenanbringungselement innerhalb der Hohlkammer der Felge vorgesehen ist. Der Felgenboden muss ebenfalls keine Löcher zum Durchführen der Speichennippel aufweisen, da die Speichenanbringungselemente zusammen mit den Speichennippeln und der Speiche in schräg gekippter Stellung von radial innen in die Hohlkammer der Felge eingeführt werden. Nach dem Zurückkippen ist das Speichenanbringungselement für radial nach innen gerichtete Kräfte zugfest an dem Felgenboden aufgenommen. Da die am Speichenende aufgeschraubten Speichennippel in direktem Kontakt mit den Speichenanbringungselementen stehen und radial nach innen durch den Felgenboden hervorstehen, kann die erforderliche Speichenspannung an den radial äußeren Enden der Speichen mit einem Werkzeug auf die Speichennippel aufgebracht werden, wodurch die Montage einfacher ist. Nachteilig bei diesem bekannten System ist allerdings, dass die Speichenanbringungselemente eine längliche Form aufweisen, die in ihrer Längserstreckung quer zur Umfangsrichtung im Felgenboden angeordnet werden, wodurch nur kleine Auflageflächen in dem Felgenboden möglich sind. Dadurch wird eine hohe Wandstärke des Felgenbodens benötigt, um die erforderliche Stabilität des Rades bereitzustellen. Außerdem wird der Speichennippel passgenau von dem Speichenanbringungselement aufgenommen, sodass hohe Querkräfte und hohe Knick- und Scherspannungen in der Speiche auftreten, die zu vermehrten Speichenbrüchen führen können.

Durch die gattungsgemäße CH 355 041 ist ein Speichenrad, insbesondere für ein Fahrrad offenbart mit einer Felge, die zwischen den beiden Felgenflanschen ein Felgenbett und einen Felgenboden aufweist, wobei in dem Felgenboden für jede Speiche ein Ankerelement vorhanden ist, das einen Sitz für den betreffenden Speichennippelkopf aufweist. Das Ankerelement kann durch eine zugeordnete Durchbrechung des Felgenbodens in gekippter Stellung eingeführt werden während es in zurückgekippter Stellung diese zugeordnet Durchbrechung abdeckt. Mit dem Hindurchschieben bzw. Einführen des Ankerelementes wird das Einsetzen des Speichennippels ermöglicht. Bei der CH 355 041 hat sich als nachteilig herausgestellt, dass eine im Ankerelement in seiner eingeführten Position mit dem Speichennippel verbundene Speiche, insbesondere wenn es sich um Räder handelt, bei denen die Speichen nicht direkt radial, sondern eher tangential von der Radnabe ausgehend zu Felge angeordnet sind, hohen Spannungen ausgesetzt ist.

Es ist deshalb die Aufgabe der vorliegenden Erfindung, ein Speichenbefestigungssystem und ein entsprechendes Rad zur Verfügung zu stellen, mit dem ein leichtes Gewicht ermöglicht wird, wobei die Verwendung von schlauchlosen Reifen möglich ist und schädliche Speichenspannungen weitgehend vermieden werden. Insbesondere soll eine leichte Montage ermöglicht werden.

Diese Aufgabe wird gelöst mit einem Rad mit den Merkmalen des Anspruchs 1. Das erfindungsgemäße Speichenbefestigungssystem ist Gegenstand von Anspruch 12. Bevorzugte Weiterbildungen der Erfindung werden in den Unteransprüchen definiert. Weitere Merkmale ergeben sich aus der Beschreibung des Ausführungsbeispiels.

Das erfindungsgemäße Rad ist insbesondere für den Einsatz an einem Fahrrad und besonders bevorzugt für den Einsatz an einem sportlichen Fahrrad geeignet und umfasst eine Felge und eine Nabe, welche eine feststehende Nabenachse und ein gegen eine Nabenachse drehbares Nabengehäuse umfasst. Weiterhin ist eine Vielzahl von zwischen dem Nabengehäuse und der Felge angeordneten Speichen vorgesehen, um die Felge mit dem Nabengehäuse drehfest zu verbinden. Die Felge weist radial außen ein Felgenbett und radial weiter innen einen mit Speichenlöchern versehenen Felgenboden auf, wobei das Felgenbett und der Felgenboden in radialer Richtung durch zwei Felgenflanken seitlich verbunden werden. An dem Felgenboden sind Speichenlöcher vorgesehen, wobei in jedem Speichenloch ein separates Halteelement angeordnet ist, das zusammen mit einem an dem Halteelement aufgenommenen Speichennippel in gekippter Stellung durch das Speichenloch durchführbar ist, während es in zurückgekippter Stellung an der Felge anliegt und in der radial nach innen gerichteten Richtung zugfest daran aufgenommen ist, um die Speiche an der Felge zu befestigen. Bei dem erfindungsgemäßen Rad weisen die Speichenlöcher eine langgestreckte Form auf bzw. sind langgestreckt ausgebildet und erstrecken sich in Umfangsrichtung des Rades länger als in der axialen Richtung. Das Halteelement und der Speichennippel sind derart gestaltet, dass eine winkelmäßig variable Ausrichtung der Speiche zur Felge ermöglicht wird. Dazu ist der Nippelkopf abgerundet ausgebildet und ist in einer abgerundet ausgebildeten Nippelkopfaufnahme des Halteelementes aufgenommen. Die Speichen sind über Nabennippel mit der Nabe verbunden, wobei die radial inneren Enden der Speichen in die Nabennippel eingeschraubt sind.

Das erfindungsgemäße Rad bietet erhebliche Vorteile. Durch die erfindungsgemäße Konstruktion wird ein Rad zur Verfügung gestellt, welches eine leichte Konstruktion erlaubt. Das Halteelement gemäß der Erfindung erlaubt die Verteilung der einwirkenden Kräfte auf eine erheblich größere Fläche, sodass die Wandstärke des Felgenbodens verringert werden kann. Dadurch wird bei gleichbleibender Stabilität des Rades ein geringeres Gesamtgewicht erzielt. Es wird eine leichte Montage ermöglicht.

Die Ausgestaltung des Halteelementes mit einer abgerundet ausgebildeten Nippelkopfaufnahme und der abgerundet ausgestaltete Nippelkopf erlauben die Übertragung von hohen Kräften, während gleichzeitig eine optimale Ausrichtung des Speichennippels und der darin angeordneten Speiche erfolgen kann. Der Speichennippel und somit die Speiche können winkelmäßig optimal ausgerichtet werden, sodass schädliche Querkräfte, Biege- und Knickspannungen an der Speiche weitestgehend vermieden werden. Damit wird die Ursache für die meisten Speichenbrüche beseitigt, während gleichzeitig ein Speichenrad mit einer Hohlkammerfelge zur Verfügung gestellt wird, bei dem konstruktiv bedingt keine Öffnungen im Felgenbett vorhanden sein müssen, um die Speichennippel von außen durch das Felgenbett durchzustecken.

Vorteilhafterweise weist das Halteelement eine Durchgangsbohrung auf, in welcher der Speichennippel mit seinem Nippelkörper angeordnet ist. Dabei ist ein Innendurchmesser der Durchgangsbohrung größer als ein Außendurchmesser des Nippelkörpers, während der am Speichennippel vorgesehene Nippelkopf einen größeren Außendurchmesser aufweist als der Innendurchmesser der Durchgangsbohrung. Dadurch wird sichergestellt, dass einerseits der Speichennippel mit seinem Nippelkopf sicher an dem Halteelement aufgenommen ist, während andererseits eine Verkippung des Nippelkörpers bei der Montage möglich ist, sodass sich der Speichennippel und die Speiche optimal auf die während der Montage vorherrschenden Bedingungen einstellen kann. Schädliche Einflüsse durch Biege- und Scherspannungen, die bei einem unbeweglich aufgenommenen Speichennippel auftreten können, werden erfindungsgemäß so weitestgehend vermieden werden, sodass die Anzahl von Speichenbrüchen bei solchen Rädern für schlauchlose Reifen deutlich reduzierbar ist.

Vorzugsweise ist der Nippelkopf spielfrei in bzw. an der Nippelkopfaufnahme angeordnet, sodass trotz der möglichen Bewegung des Nippelkopfes in der Nippelkopfaufnahme ein fester Halt ermöglicht wird. Insbesondere weist der Nippelkopf dabei ein sphärische oder kugelkopfförmige Auflagefläche auf, wobei vorzugsweise die Nippelkopfaufnahme ebenfalls einen sphärischen oder kugelkopfförmigen Auflagebereich umfasst.

In allen Ausgestaltungen weist der Speichennippel insbesondere ein Durchgangsloch mit einem Innengewinde zur Befestigung der Speiche auf, wobei sich das Innengewinde aber vorzugsweise nur über einen Teil der Länge des Speichennippels erstreckt. Vorzugsweise weist das Durchgangsloch an dem dem Nippelkopf gegenüberliegenden Ende über einen Längenabschnitt einen gewindefreien Abschnitt mit vergrößertem Innendurchmesser auf, um über diesen Längenabschnitt einen radialen Abstand zur Speiche einzuhalten.

In allen Ausgestaltungen weist das Halteelement vorzugsweise im Wesentlichen parallele Längsseiten und an den Querseiten abgerundete Enden auf. Insbesondere weist das Halteelement Auflageflächen nur an den beiden Längsenden auf. Die Auflageflächen hintergreifen dabei insbesondere den Felgenboden und sind insbesondere größer ausgebildet als der größte Querschnitt des Speichennippels quer zur Speichenlängserstreckung abzüglich des Querschnitts des Nippelkörpers. Das bedeutet, dass die Auflageflächen insgesamt oder jeweils einzeln größer sind als die Auflagefläche des Speichennippels an dem Halteelement.

Besonders bevorzugt ist die Dicke des Halteelementes größer als eine Dicke des Felgenbodens. Insbesondere ist die Dicke des Halteelements um die Durchgangsbohrung herum größer als die Dicke des Felgenbodens, sodass eine optimale Aufnahme und Überleitung der Speichenkräfte erfolgt. Die Durchgangsbohrung kann nach der Herstellung des Halteelementes durch Bohren erstellt werden. Es ist zwar ebenso möglich, die Durchgangsbohrung als Durchgangsloch über andere Mittel herzustellen. Insbesondere kann die Durchgangsbohrung als Öffnung bei der Herstellung des Halteelementes vorgesehen sein.

In allen Ausgestaltungen weist die Nabe vorzugsweise zwei separate Nabenflansche auf und die Speichen sind an diesen separaten Nabenflanschen befestigt. Die Nabenflansche sind auf die Nabenhülse aufgeschoben und über radiale Verbindungselemente mit der Nabenhülse verbunden. Vorzugsweise weisen die Verbindungselemente zylindrische Stiftteile auf, die von den Nabenflanschen aus radial nach innen in die Nabenhülse hineinragen, um auf diese Art eine drehfeste Verbindung der separaten Nabenflansche mit der Nabenhülse zu ermöglichen, während gleichzeitig die radial auf die Nabenflansche wirkenden Kräfte nicht auf die Nabenhülse übertragen werden, da die zylindrischen Stiftteile entlang ihrer Längsrichtung keine Kräfte übertragen.

Erfindungsgemäß sind die Speichen vorzugsweise über Nabennippel mit der Nabe verbunden. Die Montage des Rades kann dabei derart erfolgen, dass zunächst ein Halteelement auf das Ende einer Speiche aufgeschoben wird, auf das anschließend der Speichennippel aufgeschraubt wird. In entsprechend schräger Stellung wird das Halteelement mit dem Speichennippel in ein Speichenloch des Felgenbodens eingeführt, und zwar derart, dass nach einem Kippvorgang das andere Ende des Halteelementes ebenfalls in den Hohlraum der Hohlkammerfelge eintaucht und durch eine Zurückbewegung zugfest in dem Felgenboden aufgenommen wird.

Anschließend wird das radial innere Ende der Speiche in den Nabennippel eingeschraubt, der an dem Nabenflansch angeordnet wird. Die effektiv wirkende Speichenspannung wird schließlich durch Drehen des Speichennippels mit einem herkömmlichen Werkzeug erzeugt. So kann auf einfache Art und Weise das erfindungsgemäße Rad montiert werden.

Das erfindungsgemäße Speichenbefestigungssystem ist insbesondere für den Einsatz an einem der zuvor beschriebenen Ausgestaltungen geeignet und umfasst wenigstens eine Speiche, einen Speichennippel und ein Halteelement zur Aufnahme des Speichennippels an einer Felge, sowie einen Nabennippel für die Befestigung der Speiche an einer Nabe. Das separate Halteelement weist eine langgestreckte Form auf und erstreckt sich im eingebauten Zustand in Umfangsrichtung eines Rades länger als in der axialen Richtung. Das separate Halteelement ist dabei geeignet, zusammen mit einem an dem Halteelement aufgenommenen Speichennippel in gekippter Stellung durch ein entsprechendes Loch durchgeführt zu werden, während es in zurückgekippter Stellung an der Felge anliegt und zugfest darin angenommen ist, um die Speiche an der Felge zu befestigen. Dabei sind das Halteelement und der Speichennippel derart gestaltet, dass eine winkelmäßig variable Ausrichtung von Speichennippel und Halteelement ermöglicht wird. Dazu ist der Nippelkopf abgerundet ausgebildet und im montierten Zustand in einer abgerundet ausgebildeten Nippelkopfaufnahme des Halteelementes aufgenommen. Der Nabennippel weist ein Innengewinde auf, um das radial innere Ende der Speiche in den Nabennippel einzuschrauben.

Auch das erfindungsgemäße Speichenbefestigungssystem hat erhebliche Vorteile, da es eine spannungsarme Montage des Speichenbefestigungssystems ermöglicht. Biege- oder Scherspannungen aufgrund einer unbeweglich eingespannten Speiche werden durch das erfindungsgemäße Speichenbefestigungssystem zuverlässig vermieden, sodass Speichenbrüche deutlich reduziert werden können.

Vorzugsweise weist das Halteelement eine Durchgangsbohrung auf, in welcher der Speichennippel im montierten Zustand mit seinem Nippelkörper angeordnet ist. Ein Innendurchmesser der Durchgangsbohrung ist dabei größer als ein Außendurchmesser des Nippelkörpers, während der am Speichennippel vorgesehene Nippelkopf einen größeren Außendurchmesser aufweist als der Innendurchmesser der Durchgangsbohrung, um einen zuverlässigen Halt zu ermöglichen. Dadurch, dass der Innendurchmesser der Durchgangsbohrung größer ist als der Außendurchmesser des Nippelkörpers wird eine winkelmäßig variable Ausrichtung des Speichennippels und somit der Speiche zu dem Halteelement ermöglicht.

In allen Ausgestaltungen weist das Halteelement insbesondere an den zwei Enden jeweils einen Halteflansch auf, der dazu bestimmt ist, im montierten Zustand den Felgenboden zu hintergreifen. Die Halteflansche übertragen die auftretenden Kräfte zuverlässig auf den Felgenboden. Die Längsseiten des Halteelementes verlaufen insbesondere im Wesentlichen parallel, während sich die Halteflansche an den Querseiten befinden.

In allen Ausgestaltungen besteht das Halteelement insbesondere aus einem leichten Material und kann aus einem Leichtmetall oder einem faserverstärkten Kunststoff bestehen, der z.B. über ein Spritzgussverfahren hergestellt wird.

Die erfindungsgemäße Ausgestaltung ermöglicht unterschiedlichste Farbgestaltungen und somit optisch ansprechende Effekte, in dem die Halteelemente eine erste Farbe aufweisen während die restliche Felge in einer zweiten Farbe gehalten wird. Möglich ist es auch, das einzelne oder mehrere Halteelemente nacheinander in unterschiedlichen Farbtönen gehalten werden, sodass eine flexible Farbgestaltung des Rades möglich ist.

Zur Fixierung der Speichen an den Speichennippeln und/oder zur Fixierung der Speichen an den Nabennippeln kann an den jeweiligen Nippeln im jeweiligen Gewindebereich ein Klebstoff vorgesehen sein, der insbesondere durch das Einschrauben der Speiche aktivierbar ist. Dazu kann der Klebstoff zwei oder mehr unterschiedliche Komponenten aufweisen, die durch den Schraubvorgang aktiviert werden, sodass im Anschluss an das Einspeichen der Klebstoff aushärtet und einen festen, aber wieder lösbaren Sitz der Speiche gewährleistet.

Weitere Vorteile und Merkmale ergeben sich aus den Ausführungsbeispielen, die nun in Bezug auf die beiliegenden Figuren erläutert werden.

In den Figuren zeigen:
- Fig. 1: ein erfindungsgemäßes Vorderrad in einer Seitenansicht;
- Fig. 2: ein erfindungsgemäßes Hinterrad in einer Seitenansicht;
- Fig. 3: ein erfindungsgemäßes Hinterrad in einer perspektivischen Ansicht;
- Fig. 4: den Rotor der Hinterradnabe nach Fig. 3 in einer ersten perspektivischen Ansicht;
- Fig. 5: den Rotor der Hinterradnabe nach Fig. 3 in einer zweiten perspektivischen Ansicht;
- Fig. 6: eine perspektivische Explosionszeichnung der Hinterradnabe nach Fig. 3;
- Fig. 7: eine prinzipielle Seitenansicht eines Verbindungselementes;
- Fig. 8: eine Aufsicht auf einen Abschnitt eines Felgenbodens;
- Fig. 9: eine Aufsicht auf ein Halteelement;
- Fig. 10: eine perspektivische Ansicht auf einen Abschnitt einer Felge;
- Fig. 11: einen vergrößerten Seitenquerschnitt der Felgen- Speichenverbindung;
- Fig. 12: den Speichennippel an dem Halteelemente nach Fig. 11 in nochmals vergrößerter Darstellung;
- Fig. 13: das Einführen des Speichennippels in die Felge;
- Fig. 14: eine perspektivische Ansicht eines Nabenflansches; und
- Fig. 15: das vergrößerte Detail A-A aus der Ansicht nach Fig. 14.

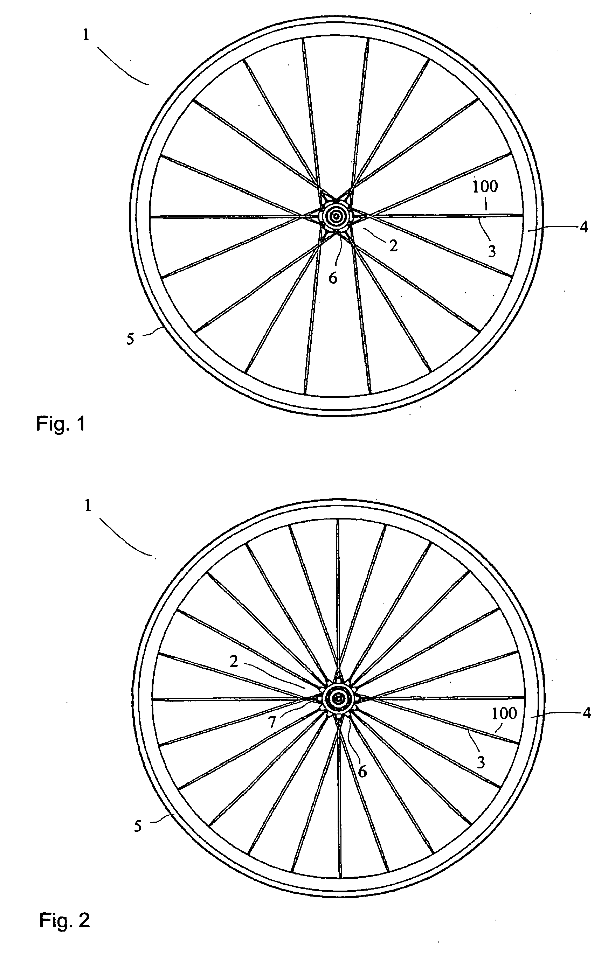

In den Figuren 1 und 2 sind zwei unterschiedlich eingespeichte erfindungsgemäße Räder jeweils in einer Seitenansicht dargestellt, die eine Nabe 2, eine Felge 4 und zwischen der Nabe und der Felge vorgesehene Speichenbefestigungssysteme 100 aufweist, die Speichen 3, Speichennippel 31 und Halteelemente 33 bzw. Nippelauflagen 33 umfassen. Weiterhin sind Nabennippel 11 vorgesehen, um das Speichenbefestigungssystem 100 mit der Nabe zu verbinden.

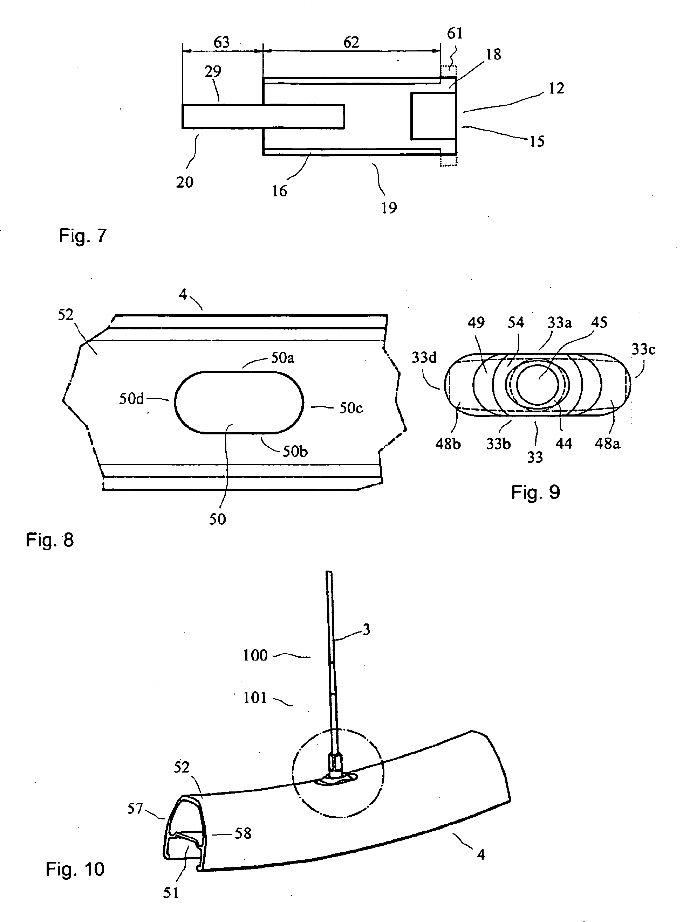

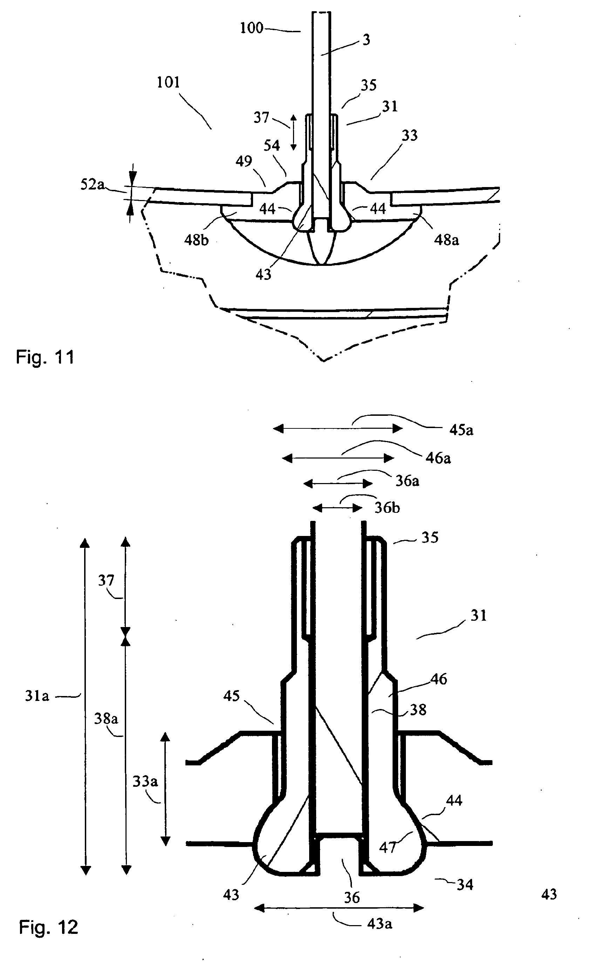

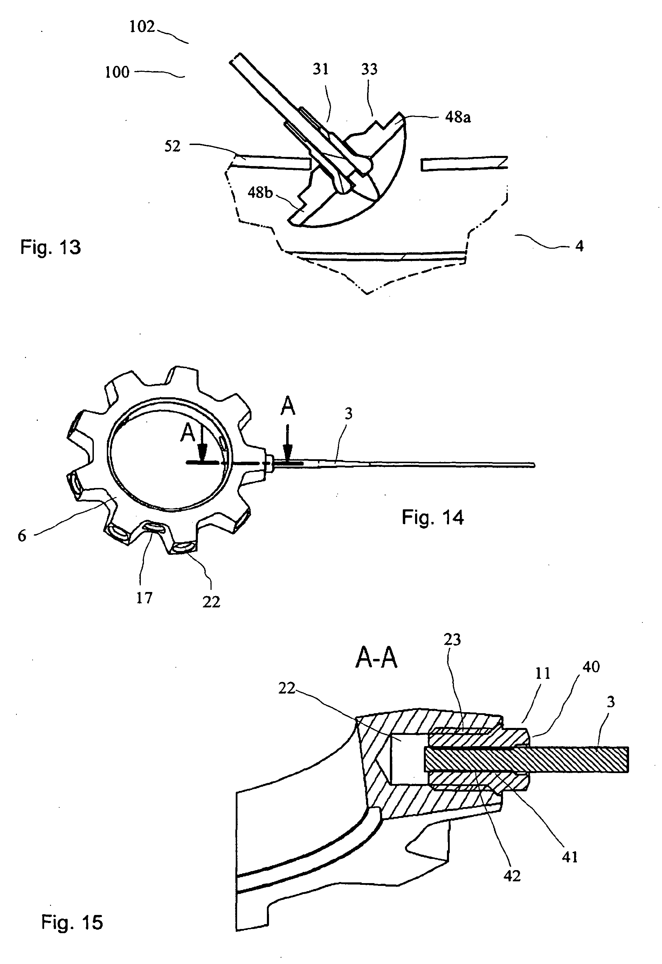

Zur Montage wird das Speichenbefestigungssystem 100 mit dem auf die Speiche 3 aufgeschobenen Halteelement 33 und dem am Speichenende aufgeschraubten Speichennippel 31 in der in Fig. 13 gezeigten gekippten Stellung 102 mit dem Felgenflansch 48a oder 48b zunächst in das Speichenloch 50 eingeführt. Anschließend wird die Speiche 3 zurückgekippt und in die Position 101 überführt (vgl. Fig. 11), in der die Felgenflansche 48a oder 48b hinter den Felgenboden 52 greifen und somit eine große Fläche zur Aufnahme und Ableitung der auftretenden Kräfte zur Verfügung stellen. Das Speichenbefestigungssystem und dessen Montage des erfindungsgemäßen Rades wird weiter unten noch mit Bezug auf die Figuren 8 - 15 ausführlicher erläutert.

Das erfindungsgemäße Rad ermöglicht die Verwendung von schlauchlosen Reifen, da zum Durchführen der Speichennippel keine Löcher im Felgenbett vorgesehen werden müssen. Weiterhin hat die erfindungsgemäße Ausgestaltung auch noch den ganz erheblichen Vorteil, dass die Auflagefläche des Speichennippels 31 an der Felge vergrößert werden kann, so dass die Felgenwandung dünner und somit leichter gefertigt werden kann, da die Belastung durch die Speichen auf eine größere Fläche verteilt wird.

In Fig. 1 ist ein Vorderrad abgebildet, bei dem einige Speichen radial und einige Speichen 3 eher tangential an der Nabe angeordnet sind. Bei dem in Figur 2 dargestellten Hinterrad sind auf der in der Abbildung vorderen Seite, der Seite auf der der Rotor für das Ritzelpaket vorgesehen ist, alle Speichen radial ausgerichtet, während auf der hinteren Seite vier Speichen radial und jeweils weitere vier Speichen tangential nach rechts und nach links von der Nabe abgehen. Insgesamt ergibt sich ein Bild eines offenen Krähenfußes, da sich in der Seitenansicht jeweils eine nach links und eine nach rechts und eine radial erstreckende Speiche überschneiden.

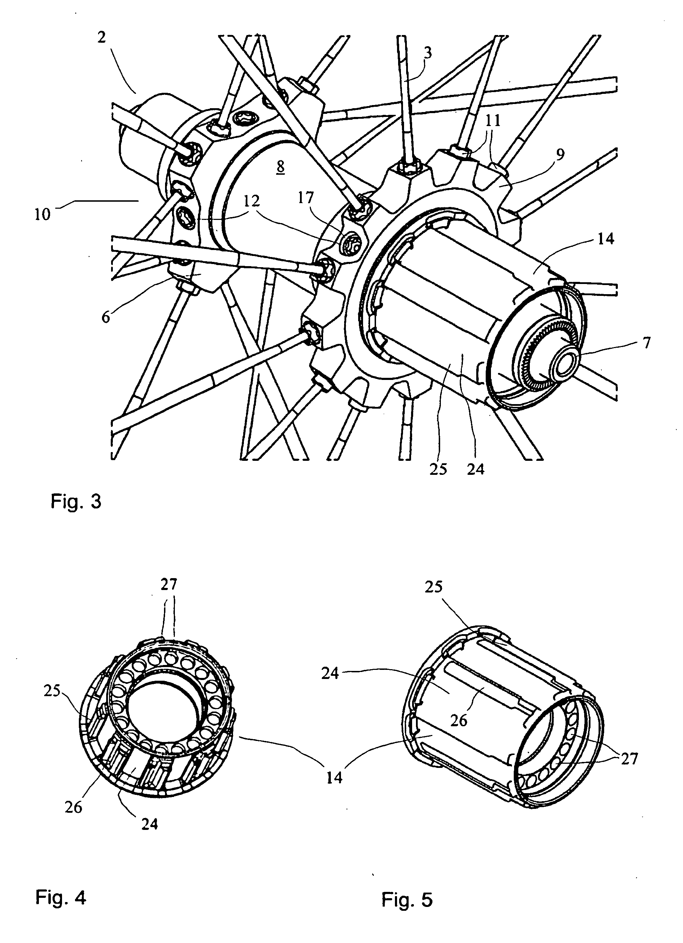

Die in Figur 3 dargestellte Hinterradnabe 2 umfasst eine Nabenachse 7, um die herum das Nabengehäuse 10 und der Rotor 14 drehbar angeordnet sind. Das Nabengehäuse 10 umfasst eine Nabenhülse 8 und zwei separate Nabenflansche 6, 9, die auf die Nabenhülse 8 aufgeschoben sind.

Um die Nabenflansche 6, 9 drehfest an der Nabenhülse 8 aufzunehmen, sind Verbindungselemente 12 vorgesehen, die an den Nabenflanschen 6, 9 angeordnet sind und die über ein Außengewinde verfügen, mit dem sie in ein Innengewinde in den Nabenflanschen eingeschraubt werden.

Die als Schraubteile 15 ausgeführten Verbindungs- bzw. Befestigungselemente 12 verfügen jeweils über einen Schraubenkopf 18, einen Schraubenkörper 19 mit einem Außengewinde 16 und ein eingesetztes Stiftteil 20 mit einem hier runden Querschnitt 21, welches über eine glatte Außenoberfläche 29 verfügt, wie es in Figur 7 dargestellt ist.

Das in Figur 7 abgebildete Schraubteil 15 kann über einen radial vergrößerten Kopfabschnitt 61 verfügen, wie es dort gepunktet dargestellt ist. Durch den Kopfabschnitt 61 mit größerem Durchmesser wird ein Anschlag zur Verfügung gestellt, der ein Einschrauben des Verbindungselementes 12 in den Nabenflansch 6 oder 9 begrenzt, um zu verhindern, dass das Stiftteil 20 auf die innerhalb der Nabenhülse angeordneten Lagersitze 55 und 56 eine Kraft ausübt. Dazu kann die Länge des Gewindeabschnittes 62 kleiner als die Dicke des Nabenflansches an dem Gewinde 17 sein und es kann die Länge des aus dem Schraubkörper 19 herausragenden Stiftabschnitts 63 insgesamt kleiner sein, als die Dicke der Nabenhülse 8 an der Stelle der Löcher 30.

Ein zu tiefes Einschrauben kann aber auch über andere Mittel verhindert werden, z.B. durch die Tiefe des Innengewindes 17 in den Nabenflanschen 6 und 9.

Wie in den Figuren 4 und 5 dargestellt, weist der Rotor 14 auf der Außenoberfläche 24 axiale Mitnehmernocken 25 auf, die mit Kerben 26 versehen sind. Die axialen Mitnehmernocken 25 erlauben eine drehfeste Anordnung eines Ritzelpaketes auf dem Rotor 14. Durch die Kerben 26 wird ein geringeres Gewicht der Nabe erzielt. Im Inneren des Rotors 14 sind Bohrungen 27 vorgesehen, die ebenfalls eine weitergehende Gewichtsreduktion des Rotors erlauben, ohne eine Funktionsbeeinträchtigung zu bewirken.

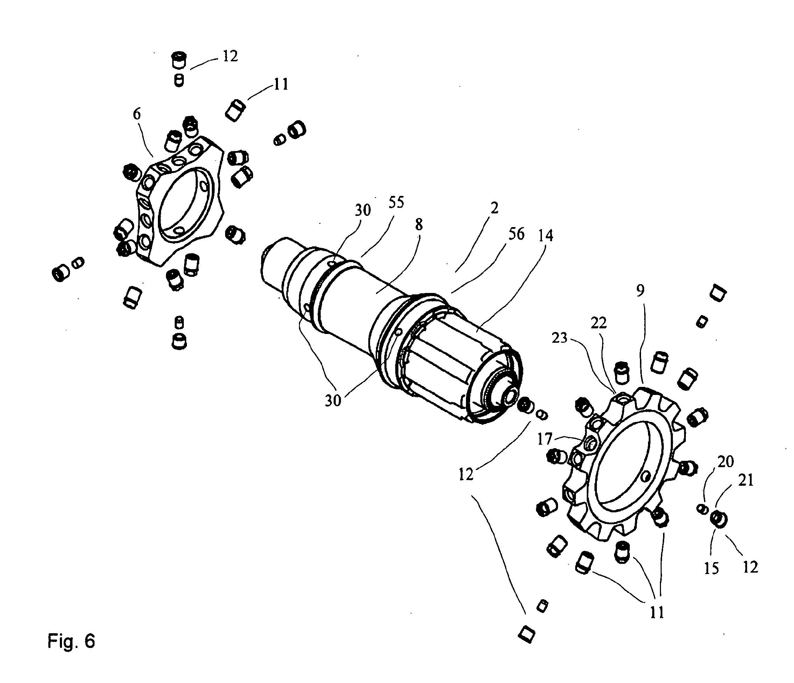

In Figur 6 ist eine Explosionsdarstellung der erfindungsgemäßen Nabe 2 dargestellt, die hier als Hinterradnabe ausgeführt ist. Die Nabenhülse 8 weist Löcher 30 auf, die hier zylindrisch ausgeführt sind und zur passgenauen Aufnahme der ebenfalls zylindrischen Stiftteile 20 dienen, um eine axiale Fixierung der Nabenflansche 6, 9 und eine Verdrehsicherung der Nabenflansche 6, 9 gegenüber der Nabenhülse 8 zu bewirken. Dabei ragen insbesondere nur die Stiftteile 20 der Verbindungselemente 12 in die Nabenhülse 8 hinein, da diese für die Belastung entsprechend ausgelegt sind und vorzugsweise aus Stahl bestehen.

Über die Verbindungselemente 12, die mit den Stiftteilen 20 in die Löcher 30 der Nabenhülse hineinragen, wird eine drehfeste Verbindung der Nabenflansche und der Nabenhülse hergestellt. Auch eine axiale Verschiebbarkeit der Nabenflansche gegenüber der Nabenhülse 8 wird unterbunden. Gleichzeitig wird aber durch die Stiftteile 20 eine Kraftübertragung in radialer Richtung verhindert, so dass die durch die Speichen radial auf die Nabenflansche wirkenden Kräfte nicht auf die Nabenhülse übertragen werden, da die Stiftteile 20 in den Löchern 30 der Nabenhülse sich in radialer Richtung gegeneinander bewegen können.

Hier im Ausführungsbeispiel sind vier als Schraubteile 15 vorgesehene Verbindungselemente 12 vorgesehen, die unter jeweils einem Winkelabstand von 90 Grad radial von außen in Gewinde 17 der Nabenflansche 6, 9 eingeschraubt werden und deren Stiftteile 20 radial nach innen in die Öffnungen 30 der Nabenhülse 8 hineinragen.

Des weiteren sind an den Nabenflanschen 6, 9 in als Gewindelöchern 23 ausgeführten Löchern 22, die im Wesentlichen in einer Ebene im Wesentlichen quer zur Erstreckung der Nabenachse 7 angeordnet sind, die Nabennippel 11 angeordnet, die zur Aufnahme von Gewindeenden der Speichen 3 dienen.

In bevorzugten Ausgestaltungen können die Nabennippel 11 an den gleichen Umfangsstellen vorgesehen sein, wie die Verbindungselemente 12, wobei die Nabennippel 11 dann radial weiter außerhalb angeordnet sind, so dass die Verbindungselemente 12 nicht von außen sichtbar sind.

Wie in Figur 6 klar erkennbar ist, ist der modulare Aufbau der erfindungsgemäßen Naben 2 insgesamt einfach. Der Aufbau kann, da keine aufwändigen und schweren axialen Klemmteile vorgesehen werden müssen, insgesamt sehr leicht ausgeführt werden.

In Figur 8 ist eine Aufsicht auf einen Abschnitt des Felgenbodens 52 der Felge 4 dargestellt, in dem ein Felgenloch 50 enthalten ist. Das Felgenloch 50 weist parallele Längskanten 50a und 50b und abgerundete Querkanten 50c und 50d auf. Das Felgenloch erstreckt sich in Umfangsrichtung der Felge, sodass die Länge in Umfangsrichtung erheblich größer als die Breite in axialer Richtung der Felge ist.

Das in Figur 9 in einer Aufsicht dargestellte Halteelement 33 ist von den Dimensionen an das Felgenloch 50 gemäß Figur 8 angepasst. Dabei entsprechen die Außenmaße des Lochverschlusses 49 des Halteelements 33 im Wesentlichen den Außenmaßen des Felgenlochs 50, wobei aber sichergestellt ist, dass der Lochverschluss 49 in das Felgenloch 50 eingeführt werden kann und somit das Felgenloch 50 verschließt. Im verschlossenen Zustand hintergreifen die Felgenflansche 48a und 48b den Felgenboden 52 und sind somit im Hohlkammerbereich der Felge angeordnet und von außen nicht sichtbar.

Im eingebauten Zustand sichtbar ist der Lochverschluss 49, der sich im Wesentlichen nahtlos an den Felgenboden 52 anschließt und der Verstärkungsring 54, der zur Verstärkung der Durchgangsbohrung bzw. des Durchgangslochs 45 des Halteelements 33 vorgesehen ist. In anderen Ausgestaltungen ist es aber auch möglich, den Verstärkungsring 54 auf der anderen Seite des Halteelements 33 vorzusehen, sodass der Felgenboden mit den Halteelementen eine einzige durchgehende Fläche bildet, durch die die Speichen radial nach innen hervortreten.

In beiden Ausgestaltungen kann eine hohe Stabilität erzielt werden, sodass die konstruktive Auslegung aufgrund von optischen Gesichtspunkten erfolgen kann.

Auf der Rückseite des Halteelements 33 (gemäß der Darstellung nach Figur 9) ist gestrichelt angedeutet die abgerundet oder kugelförmig ausgebildete Nippelkopfaufnahme 44, die zur Aufnahme des abgerundeten bzw. kugelförmig ausgebildeten Nippelkopfs 43 des Speichennippels 31 dient.

In Figur 10 ist eine perspektivische Ansicht eines Felgenabschnitts 4 dargestellt, der ein Felgenloch 50 und ein darin aufgenommenes Halteelement 33 aufweist, in dem über ein Speichennippel 31 eine Speiche 3 gehalten wird. Wie zu erkennen, ist das Halteelement 33 mit dem Speichennippel 31 im Felgenboden 52 angeordnet, an dem sich in seitlicher Richtung die Felgenflanken 57 und 58 anschließen. Dabei können die Felgenflanken 57 und 58 über das Felgenbett 51 in radialer Richtung hinausstehen und somit Felgenhörner bilden.

Figur 11 zeigt in der vergrößerten Darstellung einen seitlichen Querschnitt durch den Felgenboden 52, wobei die Querschnittsformen des Halteelements 33 und Speichennippels 31 erkennbar sind.

Der Lochverschluss 49 schließt sich kontinuierlich an den Felgenboden 52 an bis der ringförmige Verstärkungsring 54 radial nach innen hervorsteht. Zentrisch in dem Verstärkungsring 54 ist die Durchgangsbohrung 45 vorgesehen, an deren radial äußerem Ende die abgerundete Nippelkopfaufnahme 44 angeordnet ist, in der die abgerundete Auflagefläche 47 des abgerundeten bzw. kugelförmigen Nippelkopfes 43 angeordnet ist. Die Aufnahme des Speichennippels 31 in dem Halteelement 33 ist in nochmals vergrößerter Darstellung in Figur 12 abgebildet. Dabei ist erkennbar, dass die Speiche 3 mit ihrem Ende in das Gewinde 38 des Speichennippels eingeschraubt ist. Das Gewinde 38 erstreckt sich über eine Länge 38a, während am radial inneren bzw. ersten Ende 35 des Speichennippels 31 über eine Länge 37 ein gewindefreier Abschnitt in dem Speichennippel vorgesehen ist. Während das Durchgangsloch 36 einen Durchmesser 36b aufweist liegt im gewindefreien Bereich 37 ein freier Durchmesser 36a vor, der größer ist als der Durchmesser 36b.

Weiterhin ist das Durchgangsloch 45 in dem Halteelement 33 mit einem Durchmesser 45a versehen, der größer ist als der Außendurchmesser 46a des Nippelkörpers 46, der sich durch das Durchgangsloch 45 erstreckt.

Durch das Zusammenwirken der abgerundeten Nippelkopfaufnahme 44 mit der entsprechend abgerundeten Auflagefläche 47 des Nippelkopfes 43 und durch die unterschiedlichen Durchmesser des Durchgangsloches 45 und des Nippelkörpers 46 wird erreicht, dass eine winkelmäßig variable Ausrichtung der Speiche ermöglicht wird. Eine feste und unvariable Einspannung des Speichennippels in dem Halteelement, wie es im Stand der Technik üblich war, kann hingegen hohe Scher- und Knickkräfte in der Speiche auslösen, die zu einer deutlich erhöhten Speichenbruchgefahr führen. Die erfindungsgemäße Ausgestaltung reduziert aufgrund der möglichen winkelmäßigen Ausrichtung eine optimale Ausrichtung der Speiche, wobei schädliche Spannungen vermieden werden.

Der gewindefreie Abschnitt 37 erstreckt sich dabei vorzugsweise über mindestens 10 % des Länge des Speichennippels, vorzugsweise über einen Bereich zwischen 20 % und 40 % der Länge des Speichennippels.

In anderen Ausgestaltungen kann das Halteelement nicht nur an den Enden 33c und 33d Auflageflächen 48a und 48b aufweisen, sondern auch an den Breitseiten 33a und 33b, wobei die Halteflächen dann unter die Längskanten 50a und 50b greifen. Bei dieser Ausgestaltung wird ein vollumfängliche Auflage an dem Speichenloch 50 ermöglicht. Zur Montage ist in einem solchen Fall eine angepasste Geometrie und eine dreidimensional-schräge Einführung in das Speichenloch nötig.

Möglich und bevorzugt ist auch eine Anordnung von Halteflächen in Form von Auflageflächen bzw. Felgenflanschen an drei Seiten, um das Einführen in das Speichenloch zu erleichtern.

In Figur 14 ist ein Nabenflansch 6 in vergrößerter Darstellung separat dargestellt, in dem ein Nabennippel 11 mit einer Speiche 3 eingeschraubt ist.

In anderen Ausgestaltungen können Nabenflansche 6 oder 9 eingesetzt werden, die über eine Aufnahmeeinrichtung zur Aufnahme zusätzlicher Komponenten verfügen. Darüber kann z.B. insbesondere eine Scheibenbremse an dem Nabenflansch angeordnet werden. Möglich ist es auch, dass an der Nabenhülse 8 noch weitere Löcher 30 vorgesehen sind, die vorzugsweise ebenfalls zylindrisch ausgeführt sind und zur passgenauen Aufnahme von weiteren Stiftteilen 20 dienen, um darüber eine weiteren Nabenflansch anzuordnen, der z.B. eine Scheibenbremse trägt. Durch das modulare Konzept kann die erfindungsgemäße Nabe flexibel erweitert werden.

In Figur 15 ist der Schnitt A-A aus Figur 14 in vergrößerter Darstellung dargestellt. Der Nabennippel 11 weist ein durchgehendes Loch 41 mit einem Gewinde 42 auf, in welches die Speiche 3 eingeschraubt wird. An dem der Speiche zugewandten Ende des Nabennippels ist über einen Abschnitt 40 der Durchmesser der Bohrung 41 größer als der Durchmesser des Gewindes 42.

## Patentansprüche

1. Rad (1), insbesondere für ein Fahrrad,
mit einer Felge (4) und mit einer Nabe (2), welche eine feststehende Nabenachse (7) und ein gegenüber der Nabenachse (7) drehbar gelagertes Nabengehäuse (10) umfasst, sowie mit einer Vielzahl von zwischen dem Nabengehäuse (10) und der Felge (4) angeordneten Speichen (3), um die Felge (4) mit dem Nabengehäuse (10) drehfest zu verbinden,
wobei die Felge (4) zwei Felgenflanken (57,58), ein Felgenbett (51) und einen Felgenboden (52) mit Speichenlöchern (50) umfasst, an denen die Speichen (3) aufgenommen sind, wobei in jedem Speichenloch (50) ein separates Halteelement (33)angeordnet ist, das zusammen mit einem an dem Halteelement (33) aufgenommenen Speichennippel (31) in gekippter Stellung durch das Speichenloch (50) durchführbar ist, während es in zurückgekippter Stellung an der Felge (4) anliegt und zugfest darin aufgenommen ist, um die Speiche (3) an der Felge (4) zu befestigen,
wobei die Speichenlöcher (50) eine langgestreckte Form aufweisen und sich in Umfangsrichtung des Rades länger als in axialer Richtung erstrecken, wobei das Halteelement (33) und der Speichennippel (31) derart gestaltet sind, dass eine winkelmäßig variable Ausrichtung der Speiche (3) zur Felge (4) ermöglicht wird, wozu der Nippelkopf (43) abgerundet ausgebildet und in einer abgerundet ausgebildeten Nippelkopfaufnahme (44) des Halteelements (33) aufgenommen ist, **dadurch gekennzeichnet,**
**dass** die Speichen über Nabennippel (11) mit der Nabe (2) verbunden sind, wobei die radial inneren Enden der Speichen (3) in die Nabennippel (11) eingeschraubt sind.

2. Rad nach Anspruch 1, wobei das Halteelement (33) eine Durchgangsbohrung (45) aufweist, in welcher der Speichennippel (31) mit seinem Nippelkörper (46) angeordnet ist, wobei ein Innendurchmesser (45a) der Durchgangsbohrung (45) größer ist als ein Außendurchmesser (46a) des Nippelkörpers (46), und wobei der am Speichennippel(31) vorgesehene Nippelkopf (43) einen größeren Außendurchmesser (43a)aufweist als der Innendurchmesser (45a) der Durchgangsbohrung (45).

3. Rad nach Anspruch 1 oder 2, wobei der Nippelkopf (43) spielfrei in der Nippelkopfaufnahme (44) angeordnet ist.

4. Rad nach Anspruch 1, 2 oder 3, wobei der Nippelkopf (43) eine kugelkopfförmige Auflagefläche (47) aufweist und/oder wobei die Nippelkopfaufnahme (44) einen kugelkopfförmigen Auflagebereich aufweist.

5. Rad nach einem der vorhergehenden Ansprüche, wobei der Speichennippel (31) ein Durchgangsloch (36) mit einem Innengewinde (38) zur Befestigung der Speiche (3) aufweist, wobei das Innengewinde (38) sich nur über einen Teil der Länge des Speichennippels erstreckt.

6. Rad nach einem der vorhergehenden Ansprüche, wobei das Durchgangsloch (36) an dem dem Nippelkopf (43) gegenüberliegenden Ende (35) über einen Längenabschnitt (37) einen gewindefreien Abschnitt mit vergrößertem Innendurchmesser (36a) aufweist, um über diesen Längenabschnitt einen radialen Abstand zu der Speiche (3) einzuhalten.

7. Rad nach einem der vorhergehenden Ansprüche, wobei das Halteelement parallele Längsseiten (33a,33b) und abgerundete Enden (33c,33d) aufweist.

8. Rad nach einem der vorhergehenden Ansprüche, wobei das Halteelement (33) Auflageflächen (48a,48b) an den beiden Längsenden (33c,33d) aufweist, welche den Felgenboden (52) hintergreifen, wobei die Auflageflächen (48a,48b) insbesondere größer sind als der größte Querschnitt des Speichennippels (31) quer zur Speiche (3).

9. Rad nach einem der vorhergehenden Ansprüche, wobei eine Dicke (33a) des Halteelementes (33) größer als eine Dicke (52a) des Felgenbodens (52) ist.

10. Rad nach einem der vorhergehenden Ansprüche, wobei die Nabe (2) zwei separate Nabenflansche (6,9) aufweist und die Speichen (3) an den separaten Nabenflanschen (6,9) befestigt sind, die über radiale Verbindungselemente (12) mit der Nabenhülse (8) verbunden sind.

11. Rad nach einem der vorhergehenden Ansprüche, wobei die Speichen (3) über Nabennippel (11) mit der Nabe (2) verbunden sind.

12. Speichenbefestigungssystem (100) für ein Rad, insbesondere ein Rad eines Fahrrades, umfassend eine Speiche (3), einen Speichennippel (31) und ein Halteelement (33) zur Aufnahme des Speichennippels (31)an einer Felge (4), wobei das separate Halteelement (33) eine langgestreckte Form aufweist und sich in eingebautem Zustand in Umfangsrichtung länger als in axialer Richtung des Rades erstreckt,
wobei das separate Halteelement (33) geeignet ist, zusammen mit einem an dem Halteelement (33) aufgenommenen Speichennippel (31) in gekippter Stellung durch ein Speichenloch (50) durchgeführt zu werden, während es in zurückgekippter Stellung an der Felge (4) anliegt und zugfest darin aufgenommen ist, um die Speiche (3) an der Felge (4) zu befestigen,
wobei das Halteelement (33) und der Speichennippel (31) derart gestaltet sind, dass eine winkelmäßig variable Ausrichtung zueinander ermöglicht wird, wozu der Nippelkopf (43) abgerundet ausgebildet und im montierten Zustand in einer abgerundet ausgebildeten Nippelkopfaufnahme (44) des Halteelements (33) aufgenommen ist,
**dadurch gekennzeichnet, dass** ein Nabennippel für die Speiche vorgesehen ist, in den die Speiche bei der Montage einschraubbar ist.

13. Speichenbefestigungssystem nach Anspruch 12, wobei das Halteelement (33) eine Durchgangsbohrung (45) aufweist, in welcher der Speichennippel (31) im montierten Zustand mit seinem Nippelkörper (46) angeordnet ist, wobei ein Innendurchmesser (45a) der Durchgangsbohrung (45) größer ist als ein Außendurchmesser (46a) des Nippelkörpers (46), und wobei der am Speichennippel (31) vorgesehene Nippelkopf (43) einen größeren Außendurchmesser (43a) aufweist als der Innendurchmesser (45a) der Durchgangsbohrung (45).

14. Speichenbefestigungssystem nach Anspruch 12 oder 13, wobei das Halteelement (33) an den zwei Enden (33c,33d) jeweils einen Halteflansch (48a,48b) aufweist, der dazu bestimmt ist, im montierten Zustand den Felgenboden (52) zu hintergreifen.

15. Speichenbefestigungssystem nach Anspruch 12, 13, oder 14, wobei die Längsseiten (33a,33b) des Halteelementes (33) parallel verlaufen und sich die Halteflansche (48a,48b) an der Querseiten befinden.

16. Speichenbefestigungssystem nach einem der vorhergehenden Ansprüche 12 bis 15, wobei das Halteelement (33) aus einem leichten Material, insbesondere aus einem Leichtmetall besteht.

17. Speichenbefestigungssystem nach einem der vorhergehenden Ansprüche 12 bis 15, wobei das Halteelement (33) aus einem faserverstärktem Kunststoff besteht.

## Claims

1. Wheel (1), in particular for a bicycle,
comprising a rim (4) and having a hub (2) comprising a fixed hub axle (7) and a hub body (10) rotatably mounted relative to the hub axle (7), and having a plurality of spokes (3) disposed between the hub body (10) and the rim (4) to non-rotatably connect the rim (4) with the hub body (10),
wherein the rim (4) comprises two rim flanks (57, 58), a rim well (51) and a rim base (52) with spoke holes (50), at which the spokes (3) are received,
wherein each spoke hole (50) is provided with a separate holding member (33) which can be passed through the spoke hole (50) in a tilted position together with a spoke nipple (31) received at the holding member (33), while in a tilted-back position it contacts the rim (4) in which it is received to be tension-proof so as to fix the spoke (3) to the rim (4),
wherein the spoke holes (50) comprise an elongated shape and in the peripheral direction of the wheel extend to be longer than in the axial direction, wherein the holding member (33) and the spoke nipple (31) are configured so as to allow an angularly variable orientation of the spoke (3) relative to the rim (4), to which end the nipple head (43) is configured rounded and is received in a nipple head seat (44), which is configured rounded, of the holding member (33),
**characterized in that** the spokes are connected with the hub (2) through hub nipples (11) wherein the radially inwardly ends of the spokes (3) are screwed into the hub nipples (11).

2. The wheel according to claim 1, wherein the holding member (33) comprises a through bore (45) in which the spoke nipple (31) with its nipple body (46) is positioned, wherein an inner diameter (45a) of the through bore (45) is larger than an outer diameter (46a) of the nipple body (46), and wherein the outer diameter (43a) of the nipple head (43) provided at the spoke nipple (31) is larger than the inner diameter (45a) of the through bore (45).

3. The wheel according to claim 1 or 2, wherein the nipple head (43) is disposed without play in the nipple head seat (44).

4. The wheel according to claim 1, 2 or 3, wherein the nipple head (43) comprises a ball-shaped support surface (47) and/or wherein the nipple head seat (44) comprises a ball-shaped support area.

5. The wheel according to any of the preceding claims wherein the spoke nipple (31) comprises a through hole (36) with an inner thread (38) for fixing the spoke (3) wherein the inner thread (38) extends only over part of the length of the spoke nipple.

6. The wheel according to any of the preceding claims wherein the through hole (36) comprises at its end (35) opposite the nipple head (43) over a length (37) a threadless portion with an enlarged inner diameter (36a) to thus maintain a radial distance from the spoke (3) over said length.

7. The wheel according to any of the preceding claims wherein the holding member comprises parallel longitudinal sides (33a, 33b) and rounded ends (33c, 33d).

8. The wheel according to any of the preceding claims wherein the holding member (33) comprises support surfaces (48a, 48b) at the two longitudinal ends (33c, 33d) which reach behind the rim base (52), wherein the support surfaces (48a, 48b) are in particular larger than the largest cross-section of the spoke nipple (31) transverse to the spoke (3).

9. The wheel according to any of the preceding claims wherein a thickness (33a) of the holding member (33) is larger than a thickness (52a) of the rim base (52).

10. The wheel according to any of the preceding claims wherein the hub (2) comprises two separate hub flanges (6, 9) and the spokes (3) are fixed to the separate hub flanges (6, 9) which by way of radial connecting members (12) are connected with the hub sleeve (8).

11. The wheel according to any of the preceding claims wherein the spokes (3) are connected with the hub (2) through hub nipples (11).

12. Spoke fixing system (100) for a wheel, in particular a wheel of a bicycle, comprising a spoke (3), a spoke nipple (31) and a holding member (33) for receiving the spoke nipple (31) at a rim (4), said separate holding member (33) comprising an elongated shape and when mounted extending so as to be longer in the peripheral direction than in the axial direction of the wheel,
wherein the separate holding member (33) is suitable to be inserted through a spoke hole (50) in a tilted position, together with a spoke nipple (31) received at the holding member (33), while in a tilted-back position it contacts the rim (4) in which it is received to be tension-proof so as to fix the spoke (3) to the rim (4),
wherein the holding member (33) and the spoke nipple (31) are configured so as to allow an angularly variable orientation relative to one another, to which end the nipple head (43) is configured rounded and when mounted is received in a nipple head seat (44), which is configured rounded, of the holding member (33),
**characterized in that** a hub nipple for the spoke is provided into which the spoke can be screwed in assembly.

13. The spoke fixing system according to claim 12, wherein the holding member (33) comprises a through bore (45) in which the spoke nipple (31) is positioned with its nipple body (46) when mounted, wherein an inner diameter (45a) of the through bore (45) is larger than an outer diameter (46a) of the nipple body (46), and wherein the outer diameter (43a) of the nipple head (43) provided at the spoke nipple (31) is larger than the inner diameter (45a) of the through bore (45).

14. The spoke fixing system according to claim 12 or 13, wherein the holding member (33) comprises at its two ends (33c, 33d) a holding flange (48a, 48b) each, which are intended to reach behind the rim base (52) when mounted.

15. The spoke fixing system according to claim 12, 13, or 14, wherein the longitudinal sides (33a, 33b) of the holding member (33) are parallel and the holding flanges (48a, 48b) are located at the transverse sides.

16. The spoke fixing system according to any of the preceding claims 12 to 15, wherein the holding member (33) consists of a lightweight material, in particular of a light metal.

17. The spoke fixing system according to any of the preceding claims 12 to 15, wherein the holding member (33) consists of a fiber-reinforced plastic.

## Revendications

1. Roue (1), en particulier pour une bicyclette,
pourvue d'une jante (4) et d'un moyeu (2) comprenant un axe de moyeu fixe (7) et un carter de roulement (10) monté rotatif par rapport à l'axe de moyeu (7), ainsi que de plusieurs rayons (3) agencés entre le carter de roulement (10) et la jante (4) pour relier de façon fixe en rotation la jante (4) au carter de roulement (10),
la jante (4) comprenant deux flancs (57, 58), un creux (51) et un fond de jante (52) pourvu de trous de rayons (50) accueillant les rayons (3), chaque trou de rayon (50) étant muni d'une pièce de retenue (33) distincte qui peut être, avec un écrou de rayon (31) monté sur la pièce de retenue (33), passée en position basculée à travers le trou de rayon (50), alors que rebasculée en position initiale, elle s'appuie sur la jante (4) à laquelle elle est reliée de manière résistante à la traction, afin de fixer le rayon (3) à la jante (4),
les trous de rayons (50) présentant une forme allongée plus grande dans le sens de la circonférence de la roue que dans le sens de l'axe, la pièce de retenue (33) et l'écrou de rayon (31) étant conçus de telle sorte à permettre une variation dans l'orientation de l'angle formé entre le rayon (3) et la jante (4), la tête de l'écrou (43) étant arrondie dans ce but et s'insérant dans un orifice arrondi pour tête d'écrou (44) de la pièce de retenue (33), **caractérisée en ce que**,
les rayons sont reliés au moyeu (2) par des écrous de moyeu (11), les extrémités intérieures radiales des rayons (3) étant vissées dans les écrous de moyeu (11).

2. Roue selon la revendication 1, la pièce de retenue (33) présentant un trou passant (45) dans lequel est monté l'écrou de rayon (31) avec son filetage d'écrou (46), un diamètre intérieur (45a) du trou passant (45) étant supérieur au diamètre extérieur (46a) du filetage de l'écrou (46), et la tête d'écrou (43) prévue sur l'écrou de rayon (31) présentant un diamètre extérieur (43a) supérieur au diamètre intérieur (45a) du trou passant (45).

3. Roue selon la revendication 1 ou 2, la tête d'écrou (43) étant agencée sans jeu dans l'orifice pour tête d'écrou (44).

4. Roue selon la revendication 1, 2 ou 3, la tête d'écrou (43) présentant une surface d'appui de forme sphérique (47) et/ou l'orifice pour tête d'écrou (44) présentant une zone d'appui de forme sphérique.

5. Roue selon l'une quelconque des revendications précédentes, l'écrou de rayon (31) présentant un trou passant (36) à taraudage (38) servant à fixer le rayon (3), le taraudage (38) ne s'étirant que sur une partie de la longueur de l'écrou de rayon.

6. Roue selon l'une quelconque des revendications précédentes, le trou passant (36) à l'extrémité (35) située à l'opposé de la tête d'écrou (43) présentant sur une certaine longueur (37) une zone sans taraudage et dont le diamètre intérieur (36a) est plus grand afin de maintenir sur cette longueur un espacement radial par rapport au rayon (3).

7. Roue selon l'une quelconque des revendications précédentes, la pièce de retenue présentant des bords longitudinaux parallèles (33a, 33b) et des extrémités arrondies (33c, 33d).

8. Roue selon l'une quelconque des revendications précédentes, la pièce de retenue (33) présentant des surfaces d'appui (48a, 48b) sur les deux extrémités longitudinales (33c, 33d) qui s'agrippent contre le fond de jante (52), les surfaces d'appui (48a, 48b) étant en particulier plus grandes que la plus grande coupe transversale de l'écrou de rayon (31) à la transversale du rayon (3).

9. Roue selon l'une quelconque des revendications précédentes, une épaisseur (33a) de la pièce de retenue (33) étant supérieure à une épaisseur (52a) du fond de la jante (52).

10. Roue selon l'une quelconque des revendications précédentes, le moyeu (2) présentant deux flasques distincts (6, 9) et les rayons étant fixés aux flasques distincts (6, 9) qui sont reliés à la douille par le biais de pièces de raccordement (12) radiales.

11. Roue selon l'une quelconque des revendications précédentes, les rayons (3) étant raccordés au moyeu (2) par le biais d'écrous de moyeu (11).

12. Dispositif de fixation de rayons (100) pour une roue, en particulier une roue de bicyclette, comprenant un rayon (3), un écrou de rayon (31) et une pièce de retenue (33) pour recevoir l'écrou de rayon (31) sur une jante (4), la pièce de retenue distincte (33) présentant une forme allongée et étant, considérée en position montée, plus longue dans le sens de la circonférence que dans le sens de l'axe de la roue,
la pièce de retenue distincte (33) étant propre à être introduite en position basculée et avec un écrou de rayon (31) monté sur la pièce de retenue (33), à travers un trou de rayon (50), alors que rebasculée en position initiale, elle repose sur la jante (4) en résistant à la traction afin de fixer le rayon (3) à la jante (4),
la pièce de retenue (33) et l'écrou de rayon (31) étant conçus de telle sorte à permettre une variation de l'angle qui les relie, la tête de l'écrou (43) étant dans ce but façonnée en arrondi et, en position montée, venant s'insérer dans un orifice pour tête d'écrou (44) de la pièce de retenue (33),
**caractérisé en ce qu'**est prévu pour le rayon un écrou de moyeu dans lequel le rayon peut être vissé au moment de l'assemblage.

13. Dispositif de fixation de rayons selon la revendication 12, la pièce de retenue (33) présentant un trou passant (45) dans lequel est agencé en position montée l'écrou de rayon (31) avec son filetage d'écrou (46), un diamètre intérieur (45a) du trou passant (45) étant plus grand qu'un diamètre extérieur (46a) du filetage d'écrou (46) et la tête d'écrou (43) prévue sur l'écrou de rayon (31) présentant un diamètre extérieur (43a) supérieur au diamètre intérieur (45a) du trou passant (45).

14. Dispositif de fixation de rayons selon la revendication 12 ou 13, la pièce de retenue (33) présentant à chacune des deux extrémités (33c, 33d) un flasque de maintien (48a, 48b) destiné à agripper, en position montée, le fond de la jante (52).

15. Dispositif de fixation de rayons selon la revendication 12, 13 ou 14, les bords longitudinaux (33a, 33b) de la pièce de retenue (33) étant parallèles et les flasques de maintien (48a, 48b) se trouvant le long des bords transversaux.

16. Dispositif de fixation de rayons selon l'une quelconque des revendications 12 à 15, la pièce de retenue (33) étant composée d'un matériau léger, en particulier d'un métal léger.

17. Dispositif de fixation de rayons selon l'une quelconque des revendications 12 à 15, la pièce de retenue (33) étant composée d'une matière plastique en fibre renforcée.
